# FASCICULE DE BREVET EUROPEEN

(11) **EP 3 638 973 B1**
(45) Date de publication et mention de la délivrance du brevet: **02.06.2021**
(21) Numéro de dépôt: 18737493.9
(22) Date de dépôt: 13.06.2018
(51) Int. Cl.: F42B 10/54, F42B 10/56, B64D 17/50, B64D 17/44, B64D 17/46, B64D 17/76, B64D 37/12, B64C 39/02

(54) **DISPOSITIF DE FREINAGE AÉRODYNAMIQUE POUR UNE ENVELOPPE D'UNE CHARGE UTILE**
AERODYNAMISCHE BREMSVORRICHTUNG FÜR EIN NUTZLASTGEHÄUSE
AERODYNAMIC BRAKING DEVICE FOR A PAYLOAD CASING

(30) Priorité: 14.06.2017 FR 1700634
(43) Date de publication de la demande: 22.04.2020
(73) Titulaire: Nexter Munitions, 78034 Versailles Cedex (FR)
(72) Inventeur: TROUILLOT, Christian, 18023 Bourges (FR); CARREAU, Frédéric, 18023 Bourges (FR); GROGNET-QUENECAN, Cécile, 18023 Bourges (FR)
(74) Mandataire: Cabinet Chaillot
(86) Numéro de dépôt international: PCT/EP2018/065589
(87) Numéro de publication internationale: WO 2018/229092

(56) Documents cités:
- FR-A1- 2 654 505
- FR-A1- 2 679 642
- GB-A- 2 348 942
- JP-A- H10 132 499
- US-A- 4 423 660

## Description

Le domaine technique de l'invention est celui des dispositifs de freinage aérodynamique pour une enveloppe intégrant une charge utile et destinée à être éjectée d'un projectile sur trajectoire.

Il est bien connu de concevoir des projectiles qui éjectent une charge utile sur trajectoire par l'arrière, par exemple un pot éclairant (tel que décrit par le brevet FR2260772), ou un module d'attaque explosif (tel que décrit par les brevets EP1719969 et FR2654505), ou encore un drone miniaturisé.

Le projectile qui éjecte la charge utile est un obus d'artillerie (c'est-à-dire un projectile gyrostabilisé à vitesse de rotation élevée) ou bien une roquette (c'est-à-dire un projectile aérostabilisé à faible vitesse de rotation). Dans tous les cas le projectile est animé d'une vitesse relativement importante le long d'une trajectoire balistique (vitesse de l'ordre de quelques centaines de mètres par seconde).

La charge utile est le plus souvent intégrée dans une enveloppe cylindrique (souvent désignée par le terme anglo saxon de canister).

Cette enveloppe a pour fonction d'assurer la transition entre les domaines de vol du projectile et de la charge utile. En effet les ordres de grandeur des vitesses de translation et de rotation sont différents et il est nécessaire de freiner la rotation et la vitesse de l'enveloppe. Par exemple, pour un pot éclairant, pour assurer un fonctionnement optimal, la vitesse de rotation ne doit pas dépasser quelques tours par seconde.

Après freinage de l'enveloppe, la charge utile est éjectée hors de celle-ci par une composition génératrice de gaz.

Dans le cas d'un projectile éclairant, la charge utile doit ensuite se trouver freinée aérodynamiquement pour pouvoir adopter une trajectoire de descente verticale et une vitesse de quelques mètres par seconde pour permettre l'éclairage du terrain en respectant les spécifications de surface éclairée et de temps d'éclairement. Dans le cas d'un projectile dispersant une charge utile de type module d'attaque, le freinage aérodynamique permet également à celle-ci d'adopter une trajectoire de descente verticale, permettant la recherche de cibles dans une zone.

Un moyen de freinage classique pour une enveloppe est constitué par un parachute. Une difficulté rencontrée avec les parachutes est qu'un déploiement trop rapide de ces derniers risque de conduire à des interférences mécaniques avec le culot de fermeture du projectile qui est éjecté avec l'enveloppe renfermant la charge utile.

En effet le système de freinage se trouve disposé entre le culot et l'enveloppe lors de la phase d'éjection. Le freinage de l'enveloppe conduit ainsi à son rattrapage par le culot.

Il n'existe pas à ce jour de solution fiable permettant de maîtriser l'instant d'ouverture du parachute et permettant donc d'assurer que cette ouverture ne soit pas gênée par la présence du culot.

Il n'existe pas non plus à ce jour de solution efficace permettant de décaler la trajectoire d'un culot monolithique à l'instant de l'éjection de l'enveloppe.

C'est le but de l'invention que de proposer une architecture d'un dispositif de freinage permettant de maîtriser cet instant d'ouverture du parachute par rapport à la balistique relative du culot et de l'enveloppe éjectée et d'éviter toute interférence entre les éléments textiles du système de freinage et un culot.

Ainsi l'invention a pour objet un dispositif de freinage aérodynamique pour une enveloppe d'une charge utile destinée à être éjectée d'un projectile sur trajectoire, dispositif de freinage comportant au moins un parachute relié à l'enveloppe par des suspentes, le parachute étant logé dans un fourreau, dispositif caractérisé en ce que :
- le fourreau est enroulé autour d'un axe d'enroulement perpendiculaire à sa direction longitudinale, et rendu solidaire d'un boîtier cylindrique dont l'axe est parallèle à l'axe d'enroulement, boîtier lui-même solidaire d'un culot de fermeture du projectile ;
- les suspentes sont liées à l'enveloppe par l'intermédiaire d'un câble prolongateur ;
- le câble prolongateur est enroulé autour de l'axe du boîtier et fixé à ce dernier par au moins trois fils à casser périphériques, qui sont régulièrement répartis angulairement.

Avantageusement, le fourreau pourra comporter au moins deux compartiments longitudinaux, un pour une voilure du parachute et l'autre pour les suspentes, les deux compartiments étant adjacents et parallèles l'un à l'autre.

Le fourreau pourra être lié au boîtier par quatre sangles radiales qui seront fixées les unes aux autres par un fil à casser central qui sera rompu par le câble prolongateur après la rupture du dernier fil à casser périphérique.

Le fourreau peut porter avantageusement une boucle textile fermée qui est fixée au niveau de son extrémité arrière opposée à l'ouverture des compartiments, boucle textile ayant pour fonction d'assurer un freinage aérodynamique du fourreau, facilitant ainsi l'extraction des suspentes et de la voilure du parachute hors du fourreau.

Selon une caractéristique, la boucle textile peut être fixée au fourreau par des pattes s'étendant sur sensiblement toute la longueur du fourreau.

Selon un mode de réalisation, la charge utile pourra être disposée dans un pot qui sera éjecté hors de l'enveloppe après freinage de cette-dernière.

Selon un autre mode de réalisation, la charge utile pourra être disposée dans l'enveloppe elle-même, l'enveloppe étant disposée à l'intérieur d'un étui assurant un freinage en rotation.

L'invention sera mieux comprise à la lecture de la description qui va suivre d'un mode particulier de réalisation, description faite en référence aux dessins annexés et dans lesquels :
- La figure 1 montre un projectile gyrostabilisé éjectant une enveloppe d'une charge utile sur trajectoire au début de l'éjection ;
- La figure 2 montre l'enveloppe de charge utile reliée au culot ;
- La figure 3 montre une étape ultérieure d'éloignement du culot et de l'enveloppe de charge utile ;
- La figure 4a montre le début de l'étape de séparation du fourreau contenant les suspentes et la voilure du parachute et du culot ;
- La figure 4b montre la localisation relative du culot et du fourreau après leur séparation ;
- La figure 5a montre l'étape de délovage du ruban extracteur et le début d'extraction du parachute hors du fourreau ;
- La figure 5b est une vue partielle du fourreau portant une boucle textile, vue suivant la direction V repérée à la figure 5a ;
- La figure 6 montre le parachute complètement déployé ;
- La figure 7 montre en vue frontale le culot portant le fourreau du parachute ;
- La figure 8 montre schématiquement en perspective le fourreau de parachute avec ses deux compartiments avant sa mise en place dans son boîtier.

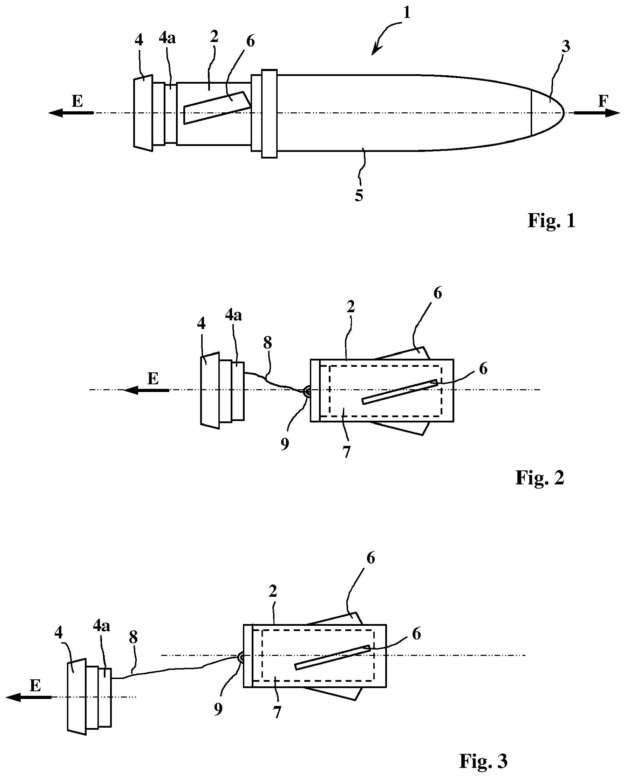

En se reportant à la figure 1, un projectile 1 éjecte sur trajectoire une enveloppe 2 renfermant une charge utile, par exemple un pot de composition pyrotechnique éclairante. D'une façon classique l'éjection est commandée par une fusée chronométrique 3 qui provoque l'initiation d'une charge génératrice de gaz dont la pression s'exerce sur l'enveloppe 2 suivant la direction d'éjection E et sur l'ogive dans la direction F.

La pression provoque par ailleurs le cisaillement de la liaison mécanique qui reliait un culot 4 au corps 5 du projectile 1. La figure 2 montre l'enveloppe 2 une fois éjectée hors du corps de projectile. L'enveloppe porte des ailettes 6 qui permettent son freinage en rotation. De telles ailettes sont l'objet de la demande de brevet EP2863164, il n'est donc pas nécessaire de les décrire plus en détails. L'enveloppe 2 renferme un pot 7 de charge utile (figuré par des traits pointillés). Suivant ce mode de réalisation, le pot 7 est éjecté ultérieurement hors de l'enveloppe 2, après freinage de cette dernière par le dispositif selon l'invention. L'éjection sera assurée par une composition génératrice de gaz après combustion d'un retard pyrotechnique (éléments classiques non représentés). Un autre parachute (non représenté) sera logé dans l'enveloppe 2 pour permettre le freinage de la descente du pot 7.

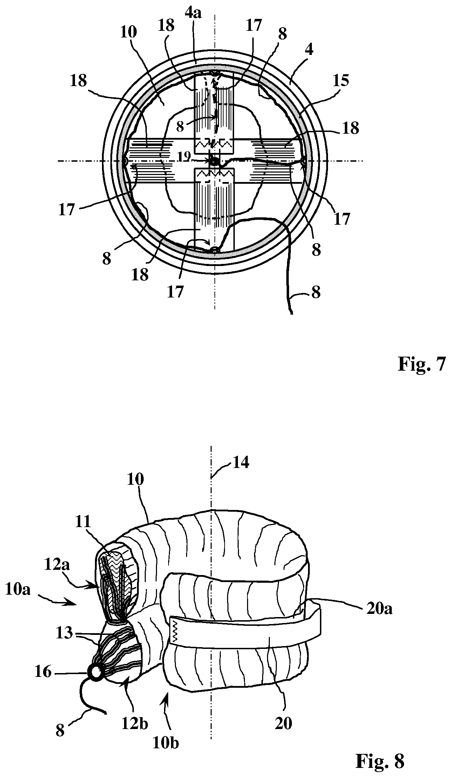

Le culot 4 porte une pièce interface 4a qui est vissée sur le culot et dans laquelle est encapsulé un boîtier plastique 15 (figure 7) qui contient le dispositif de freinage.

Suivant la figure 2, le culot 4 a commencé à s'éloigner de l'enveloppe 2. Un câble prolongateur 8 relie l'enveloppe 2 à un parachute qui se loge à l'intérieur du culot 4. Pour ne pas torsader le câble prolongateur 8, ce qui aurait pour effet néfaste de le raccourcir, le câble 8 est relié à l'enveloppe 2 par l'intermédiaire d'un émerillon 9 libre en rotation. L'émerillon est équipé d'un roulement à billes adapté aux hautes vitesses. Le culot 4 conserve en effet sa vitesse de rotation initiale qui peut atteindre plus de 200 tours par seconde pour un obus d'artillerie.

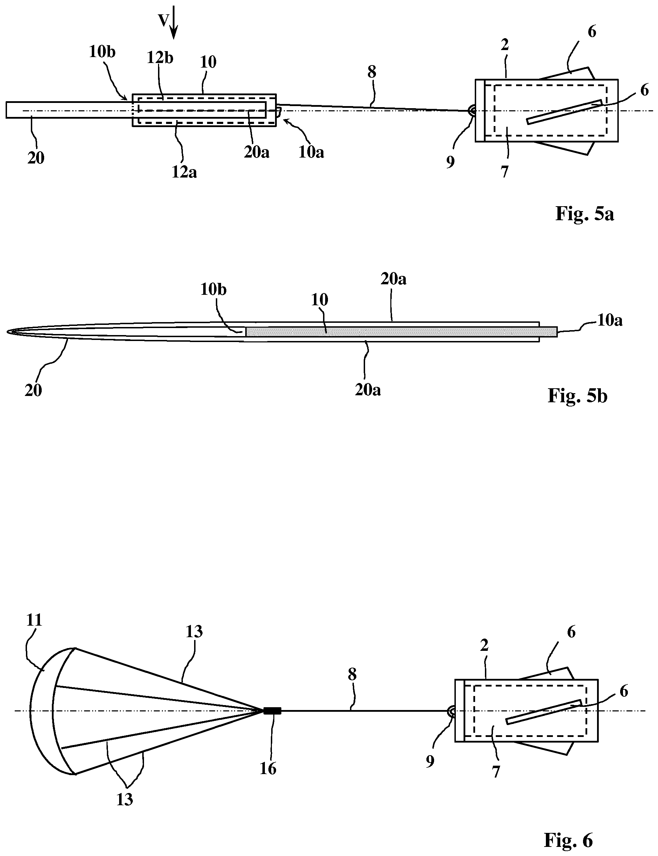

La figure 8 montre un fourreau 10 à l'intérieur duquel se loge le parachute 11 à l'état plié. Le fourreau 10 a la forme d'une poche rectangulaire (voir les figures 5a et 5b), poche qui comporte deux compartiments longitudinaux, un premier compartiment 12a pour recevoir la voilure du parachute 11 et un deuxième compartiment 12b pour loger les suspentes 13 du parachute 11.

Comme on le voit à la figure 5a qui montre le fourreau 10 déplié, les deux compartiments 12a et 12b sont adjacents et parallèles l'un à l'autre.

Le fourreau 10 est réalisé en un matériau synthétique tel que le polyamide, cela pour faciliter l'extraction du parachute hors de l'enveloppe 10 et aussi réduire l'encombrement et la masse.

Comme le montre la figure 8, le fourreau 10 est enroulé autour d'un axe d'enroulement 14 qui est perpendiculaire à sa direction longitudinale (la longueur du fourreau rectangulaire). Cet enroulement permet de rapprocher l'ouverture 10a (ou extrémité avant) du fourreau et le fond 10b (ou extrémité arrière) dudit fourreau. Il permet de loger dans un minimum de volume le fourreau 10 à l'intérieur d'un boîtier 15 cylindrique en matière plastique (figure 7). Le boîtier 15 est réalisé en un matériau plastique pour éviter d'agresser les éléments textiles du système de freinage lors des accélérations de tir.

Le boîtier 15 a son axe parallèle à l'axe d'enroulement 14 et il est lui-même rendu solidaire du culot 4 par l'intermédiaire de la pièce interface 4a qui est vissée sur le culot 4. Le boîtier plastique 15 est encapsulé dans la pièce 4a une fois cette pièce vissée sur le culot. Le câble prolongateur 8 est relié aux suspentes 13 par un raccord 16.

Comme on le voit plus nettement sur la figure 7, le câble prolongateur 8 est enroulé autour de l'axe du boîtier 15 et il est fixé à ce dernier par au moins quatre fils calibrés (dits fils à casser périphériques) 17 qui sont régulièrement répartis angulairement.

Le fond du boîtier plastique 15 est équipé de quatre fentes périphériques et d'une fente centrale (non représentées). Les quatre sangles 18 sont cousues entre elles et forment une croix sous le fond du boîtier 15. Les quatre fentes périphériques permettent de passer les quatre extrémités des sangles 18 pour venir les refermer sur le fourreau 10.

Les quatre sangles 18 une fois refermées sur le fourreau 10 sont fixées les unes aux autres par un fil à casser central 19 qui est également lié au câble prolongateur 8. Ce fil à casser central 19 est repris par une petite boucle qui passe dans la fente centrale et qui est cousue sur les sangles 18 qui se croisent sous le boîtier.

Une telle architecture conduit à retarder le délovage du câble prolongateur 8 hors du boîtier 15. En effet la traction exercée par le câble prolongateur 8 lors de l'éloignement du culot 4 (figure 2) conduit à la rupture successive des quatre fils à casser périphériques 17.

On maîtrise ainsi la séquence de délovage du câble prolongateur 8. Ce n'est qu'après rupture du dernier fil à casser périphérique 17 qu'intervient la rupture du fil à casser central 19.

Comme on le voit à la figure 3, après éjection hors du projectile, le culot 4 se décale latéralement par rapport à l'enveloppe 2. Ce décalage est naturel en raison des perturbations initiales liées à la séparation. Les trajectoires ne restent pas parfaitement colinéaires en fonction du temps.

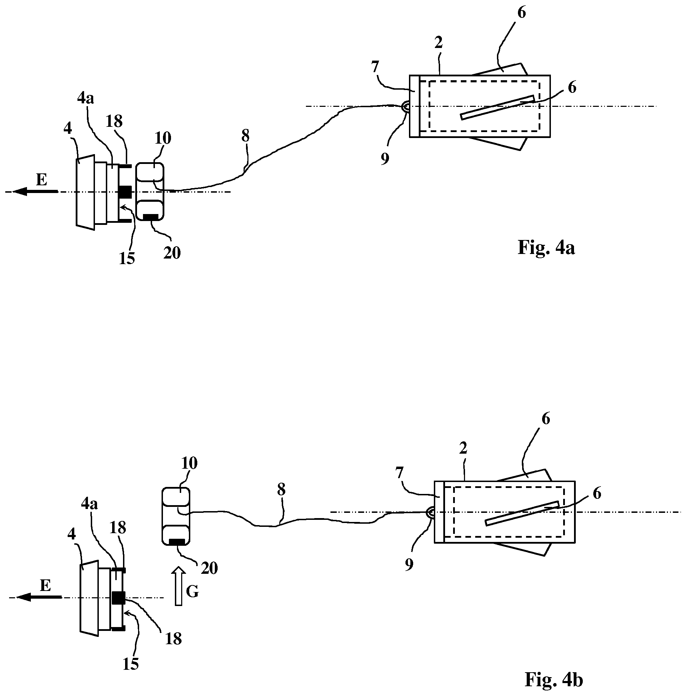

Comme on le voit à la figure 4a, après rupture du dernier fil à casser périphérique, les sangles 18 s'ouvrent et libèrent le fourreau 10 équipé d'une boucle textile d'extraction 20. Le décalage entre le culot 4 et l'enveloppe 2 s'est accru au cours de la rupture des fils à casser. Ce décalage devient compatible d'une ouverture du parachute sans interférences avec le culot.

Sous l'effet de l'éloignement relatif du culot 4 et de l'enveloppe 2 et de la rotation toujours élevée du culot 4, le fourreau 10 est extrait du boîtier plastique 15. Comme on le voit à la figure 4b, le fourreau 10, après extraction hors du culot 4, se place dans le lit du vent et se repositionne sensiblement colinéairement à la trajectoire de l'enveloppe 2 (déplacement suivant la flèche G). Les sangles 18 qui sont en textile se replient le long de la pièce interface 4a sous l'effet de la pression aérodynamique.

Le fourreau 10 vient se placer pratiquement instantanément dans le lit du vent sous l'effet de la traînée aérodynamique du fourreau 10 et de la boucle textile 20 (figure 5a) et donc il s'éloigne encore du culot 4.

L'invention permet ainsi de retarder l'instant d'extraction du fourreau 10 et le début du délovage des éléments textiles pour laisser le temps au culot 4 de se décaler naturellement latéralement. Les suspentes et la voilure peuvent donc être extraites hors du fourreau 10 et elles se déloveront avec le minimum de risques d'être coupées et déchirées par le culot.

Comme on le voit aux figures 5a et 5b, le fourreau 10 porte donc une boucle textile 20 fermée qui est fixée au niveau de son extrémité arrière 10b opposée à l'extrémité avant 10a du fourreau 10 portant l'ouverture des compartiments 12a, 12b (voir aussi la figure 8).

La boucle textile 20 a pour fonction d'assurer fiablement l'extraction du fourreau 10 et de libérer dans un premier temps les suspentes 13 et ensuite la voilure du parachute 11 hors du fourreau 10. Une telle disposition accélère le dépliement du fourreau 10 et facilite aussi l'extraction des suspentes 13 et de la voilure du parachute 11 hors du fourreau 10.

La boucle textile 20 est prolongée par des pattes 20a (les extrémités de la boucle 20) qui s'étendent sur sensiblement toute la longueur du fourreau 10, ce qui permet de coudre la boucle 20 sur sensiblement toute la longueur du fourreau 10 dans le but de le renforcer et de répartir la force de traction exercée par la boucle 20 sur une plus grande surface du fourreau 10.

En retardant le déploiement du parachute 11, l'invention permet d'assurer un éloignement du culot 4 et du pot 7 suffisant pour éviter toute interférence ultérieure entre le culot 4 et le parachute 11. On augmente ainsi la fiabilité du dispositif de freinage aérodynamique qui peut toujours se déployer sans gêne.

La temporisation résulte de la rupture de fils à casser 17,19 qui ont un diamètre calibré et dont la résistance mécanique à la rupture est bien maîtrisée. Dans toutes les conditions de tir, à chaud et à froid notamment, ce sont toujours les fils qui cassent, assurant ainsi la robustesse des comportements car tout délovage anticipé augmente les risques de collision. La temporisation est ainsi assurée quelle que soit la température à laquelle est soumis le dispositif.

Dans le mode de réalisation qui a été décrit, la charge utile est disposée dans un pot qui est éjecté hors de l'enveloppe après freinage de celle-ci.

A titre de variante il est possible de disposer la charge utile (par exemple une composition éclairante) directement dans l'enveloppe qui est reliée au parachute. Dans ce cas l'enveloppe sera elle-même logée dans un étui (non représenté) qui portera des ailettes 6 de freinage en rotation. Une fois le parachute 11 déployé, ce dernier pourra assurer l'extraction de l'enveloppe hors de son étui de freinage en rotation.

On a décrit un mode de réalisation dans lequel il y a quatre fils à casser périphériques 17. Il serait possible de ne prévoir que trois fils à casser régulièrement répartis. Mais la temporisation obtenue pour la libération du fourreau 10 hors du culot 4 sera alors plus faible.

Inversement on pourra prévoir plus de quatre fils à casser 17 ce qui aura pour effet d'augmenter le délai nécessaire pour libérer le fourreau 10.

## Revendications

1. Dispositif de freinage aérodynamique pour une enveloppe (2) d'une charge utile destinée à être éjectée d'un projectile (1) sur trajectoire, dispositif de freinage comportant au moins un parachute (11) relié à l'enveloppe (2) par des suspentes (13), le parachute (11) étant logé dans un fourreau (10), tel ***que*** :
- le fourreau (10) est enroulé autour d'un axe d'enroulement (14) perpendiculaire à sa direction longitudinale, et rendu solidaire d'un boîtier cylindrique (15) dont l'axe est parallèle à l'axe d'enroulement (14), boîtier lui-même solidaire d'un culot (4) de fermeture du projectile ;
- les suspentes (13) sont liées à l'enveloppe (2) par l'intermédiaire d'un câble prolongateur (8) ;
- le câble prolongateur (8) est enroulé autour de l'axe du boîtier (15) et fixé à ce dernier par au moins trois fils à casser périphériques (17), qui sont régulièrement répartis angulairement.

2. Dispositif de freinage aérodynamique selon la revendication 1, **caractérisé en ce que** le fourreau (10) comporte au moins deux compartiments longitudinaux (12a,12b), un pour une voilure du parachute (11) et l'autre pour les suspentes (13), les deux compartiments (12a,12b) étant adjacents et parallèles l'un à l'autre.

3. Dispositif de freinage aérodynamique selon une des revendications 1 ou 2, **caractérisé en ce que** le fourreau (10) est lié au boîtier (15) par quatre sangles radiales (18) qui sont fixées les unes aux autres par un fil à casser central (19) qui est rompu par le câble prolongateur (8) après la rupture du dernier fil à casser périphérique (17).

4. Dispositif de freinage aérodynamique selon une des revendications 1 à 3, **caractérisé en ce que** le fourreau (10) porte une boucle textile fermée (20) qui est fixée au niveau de son extrémité arrière (10b) opposée à l'ouverture des compartiments (12a,12b), boucle textile (20) ayant pour fonction d'assurer un freinage aérodynamique du fourreau (10), facilitant ainsi l'extraction des suspentes (13) et de la voilure du parachute (11) hors du fourreau (10).

5. Dispositif de freinage aérodynamique selon la revendication 4, **caractérisé en ce que** la boucle textile (20) est fixée au fourreau par des pattes (20a) s'étendant sur sensiblement toute la longueur du fourreau (10).

6. Dispositif de freinage aérodynamique selon une des revendications 1 à 5, **caractérisé en ce que** la charge utile est disposée dans un pot (7) qui est éjecté hors de l'enveloppe (2) après freinage de cette-dernière.

7. Dispositif de freinage aérodynamique selon une des revendications 1 à 5, **caractérisé en ce que** la charge utile est disposée dans l'enveloppe (2) elle-même, l'enveloppe étant disposée à l'intérieur d'un étui assurant un freinage en rotation.

## Patentansprüche

1. Aerodynamische Bremsvorrichtung für einen Mantel (2) einer Nutzlast, die bestimmt ist, aus einem Projektil (1) auf eine Flugbahn ausgeworfen zu werden, wobei die Bremsvorrichtung mindestens einen Fallschirm (11) aufweist, der mit dem Mantel (2) anhand von Aufhängungen (13) verbunden ist, wobei der Fallschirm (11) in einer Hülle (10) untergebracht ist, derart, dass:
- die Hülle (10) um eine Wickelachse (14) senkrecht zu ihrer Längsrichtung gewickelt und mit einem zylindrischen Gehäuse (15) fest verbunden ist, dessen Achse parallel zur Wickelachse (14) ist, wobei das Gehäuse selbst mit einem Verschlussboden (4) des Projektils fest verbunden ist;
- die Aufhängungen (13) mit dem Mantel (2) über ein Verlängerungskabel (8) verbunden sind;
- das Verlängerungskabel (8) um die Achse des Gehäuses (15) gewickelt und an diesem mit mindestens drei peripheren zu zerstörenden Seilen (17) befestigt ist, die winklig gleichmäßig beabstandet sind.

2. Aerodynamische Bremsvorrichtung nach Anspruch 1, **dadurch gekennzeichnet, dass** die Hülle (10) mindestens zwei Längsfächer (12a, 12b) aufweist, ein Fach für eine Tragfläche des Fallschirms (11) und das andere Fach für die Aufhängungen (13), wobei die zwei Fächer (12a, 12b) nebeneinander und parallel zueinander sind.

3. Aerodynamische Bremsvorrichtung nach einem der Ansprüche 1 oder 2, **dadurch gekennzeichnet, dass** die Hülle (10) mit dem Gehäuse (15) anhand von vier radialen Gurten (18) verbunden ist, die mit einem zentralen zu zerstörenden Seil (19) aneinander befestigt sind, das von dem Verlängerungskabel (8) nach dem Riss des letzten peripheren zu zerstörenden Seils (17) durchtrennt wird.

4. Aerodynamische Bremsvorrichtung nach einem der Ansprüche 1 bis 3, **dadurch gekennzeichnet, dass** die Hülle (10) eine geschlossene Textilschlaufe (20) trägt, die im Bereich ihres hinteren Endes (10b) gegenüber der Öffnung der Fächer (12a, 12b) befestigt ist, wobei die Textilschlaufe (20) die Aufgabe hat, ein aerodynamisches Bremsen der Hülle (10) sicherzustellen, wodurch das Herausnehmen der Aufhängungen (13) und der Tragfläche des Fallschirms (11) aus der Hülle (10) erleichtert wird.

5. Aerodynamische Bremsvorrichtung nach Anspruch 4, **dadurch gekennzeichnet, dass** die Textilschlaufe (20) mit Füßen (20a) an der Hülle befestigt ist, die sich über etwa die gesamte Länge der Hülle (10) erstreckt.

6. Aerodynamische Bremsvorrichtung nach einem der Ansprüche 1 bis 5, **dadurch gekennzeichnet, dass** die Nutzlast in einem Behälter (7) angeordnet ist, der aus dem Mantel (2) nach dem Bremsen dieses Zuletztgenannten ausgeworfen wird.

7. Aerodynamische Bremsvorrichtung nach einem der Ansprüche 1 bis 5, **dadurch gekennzeichnet, dass** die Nutzlast im Mantel (2) selbst angeordnet ist, wobei der Mantel in einem Etui angeordnet ist, das eine Rotationsbremsung sicherstellt.

## Claims

1. An aerodynamic braking device for a casing (2) of a payload intended to be ejected from a projectile (1) on its trajectory, the braking device including at least one parachute (11) connected to the casing (2) by hangers (13), the parachute (11) being housed in a sleeve (10), such that:
- the sleeve (10) is wound around an axis of winding (14) perpendicular to its longitudinal direction, and attached to a cylindrical housing (15), the axis of which is parallel to the axis of winding (14), the housing in turn being secured to a base (4) that closes off the projectile;
- the hangers (13) are connected to the casing (2) by means of an extension cable (8);
- the extension cable (8) is wound around the axis of the housing (15) and attached thereto by at least three peripheral break lines (17), which are uniformly angularly distributed.

2. The aerodynamic braking device according to claim 1, **characterised in that** the sleeve (10) includes at least two longitudinal compartments (12a, 12b), one for a canopy of the parachute (11) and the other for the hangers (13), the two components (12a, 12b) being adjacent and parallel to one another.

3. The aerodynamic braking device according to one of claims 1 or 2, **characterised in that** the sleeve (10) is connected to the housing (15) by four radial straps (18) that are fastened to one another by a central break line (19) that will be broken by the extension cable (8) after the breaking of the last peripheral break line (17).

4. The aerodynamic braking device according to one of claims 1 to 3, **characterised in that** the sleeve (10) bears a closed textile loop (20) that is fastened at its rear end (10b) opposite the opening of the compartments (12a, 12b), the textile loop (20) serving to ensure aerodynamic braking of the sleeve (10), thus facilitating the extraction of the hangers (13) and the canopy of the parachute (11) from the sleeve (10).

5. The aerodynamic braking device according to claim 4, **characterised in that** the textile loop (20) is fastened to the sleeve by tabs (20a) extending over substantially the entire length of the sleeve (10).

6. The aerodynamic braking device according to one of claims 1 to 5, **characterised in that** the payload is arranged in a pot (7) that is ejected from the casing (2) after braking of the latter.

7. The aerodynamic braking device according to one of claims 1 to 5, **characterised in that** the payload is arranged in the casing (2) itself, the casing being arranged inside a cartridge ensuring a rotational braking.
